(19) Europäisches Patentamt
European Patent Office
Office européen des brevets

(11) **EP 3 584 915 B1**

(12) **EUROPÄISCHE PATENTSCHRIFT**

(45) Veröffentlichungstag und Bekanntmachung des Hinweises auf die Patenterteilung:
**20.12.2023   Patentblatt 2023/51**

(21) Anmeldenummer: **18178782.1**

(22) Anmeldetag: **20.06.2018**

(51) Internationale Patentklassifikation (IPC):
**H02M 1/32** (2007.01)      **H02M 3/156** (2006.01)
**G05F 1/573** (2006.01)      **H02H 7/12** (2006.01)
**H02H 9/02** (2006.01)      **H02H 9/04** (2006.01)

(52) Gemeinsame Patentklassifikation (CPC):
**H02M 3/156; H02H 7/1213; H02M 1/32;**
H02M 1/348

(54) **EINGANGSSCHALTUNG FÜR EINE STROMVERSORGUNG**

INPUT CIRCUIT FOR A POWER SUPPLY

CIRCUIT D'ENTRÉE POUR UNE ALIMENTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.12.2019   Patentblatt 2019/52**

(73) Patentinhaber: **Siemens Aktiengesellschaft 80333 München (DE)**

(72) Erfinder:
• **Rothmayer, Thomas
1140 Wien (AT)**
• **Schweigert, Harald
1120 Wien (AT)**

(74) Vertreter: **Siemens Patent Attorneys
Postfach 22 16 34
80506 München (DE)**

(56) Entgegenhaltungen:
WO-A1-2017/056298      DE-A1-102015 118 165
US-A1- 2015 207 426      US-A1- 2016 036 431
US-A1- 2017 005 568

• **William Phipps: "NEW GENERATION THREE-PHASE RECTIFIER", Thesis, 1. Juli 2008 (2008-07-01), XP055535559, Christchurch New Zealand Gefunden im Internet: URL:https://ir.canterbury.ac.nz/bitstream/ handle/10092/2371/thesis_fulltext.pdf;sequ ence=1 [gefunden am 2018-12-17]**
• **DCHAR ILYAS ET AL: "Robustness of SiC MOSFET under avalanche conditions", 2017 IEEE APPLIED POWER ELECTRONICS CONFERENCE AND EXPOSITION (APEC), IEEE, 26. März 2017 (2017-03-26), Seiten 2263-2268, XP033098583, DOI: 10.1109/APEC.2017.7931015 [gefunden am 2017-05-17]**
• **ALEXANDER BOLOTNIKOV ET AL: "Overview of 1.2kV - 2.2kV SiC MOSFETs targeted for industrial power conversion applications", 2015 IEEE APPLIED POWER ELECTRONICS CONFERENCE AND EXPOSITION (APEC), 1. März 2015 (2015-03-01), Seiten 2445-2452, XP055535184, DOI: 10.1109/APEC.2015.7104691 ISBN: 978-1-4799-6735-3**
• **MITCHELL D. KELLEY ET AL: "Single-pulse avalanche mode operation of 10-kV/10-A SiC MOSFET", MICROELECTRONICS AND RELIABILITY., Bd. 81, 1. Februar 2018 (2018-02-01), Seiten 174-180, XP055535659, GB ISSN: 0026-2714, DOI: 10.1016/j.microrel.2017.12.011**
• **Vishay: "Power MOSFET Avalanche Design Guidelines", Application Note AN-1005, 6. Dezember 2011 (2011-12-06), XP055535661, Gefunden im Internet: URL:https://www.vishay.com/docs/90160/an10 05.pdf [gefunden am 2018-12-17]**

## Beschreibung

## Technisches Gebiet

Die gegenständliche Erfindung betrifft allgemein das Gebiet der Elektrotechnik, insbesondere den Bereich der Leistungselektronik sowie leistungselektronischer Schaltungen. Im Speziellen bezieht sich die vorliegende Erfindung auf eine Eingangsschaltung für eine Stromversorgung. Dabei wird eine Eingangsspannung der Eingangsschaltung durch periodisches Schalten eines Schaltelements zwischen einem leitenden und einem gesperrten Zustand in eine Ausgangsspannung der Eingangsschaltung umgesetzt, wobei eine mit dem Schaltelement in Serie angeordnete Induktivität zumindest teilweise während einer Schaltperiode des Schaltelements von einem Strom durchflossen ist. Dieser Strom lädt eine ausgangsseitige Kapazität auf, von welchem die Ausgangsspannung zur Verfügung gestellt wird, und wird bei gesperrtem Zustand des Schaltelements von einer aktiven Schaltereinheit übernommen. Weiterhin ist ein Stromfluss durch das Schaltelement im gesperrten Zustand zugelassen, wenn eine vorgegebene Durchbruchsspannung am Schaltelement überschritten ist.

## Stand der Technik

In der Automatisierungstechnik werden heutzutage häufig Stromversorgungen eingesetzt, von welchen eine Gleichspannung als Ausgangsspannung zur Versorgung von Verbrauchern wie z.B. einer Steuerelektronik oder anderen Teilen von elektrischen Anlagen zur Verfügung gestellt wird. Derartige Stromversorgungen liefern als vordefinierte Versorgungsspannung eine vorgegebene Ausgangsspannung (z.B. 24V Gleichspannung als Nennausgangsspannung und 28V Gleichspannung als maximale Ausgangsspannung). Eine derartige Stromversorgung wird üblicherweise aus einem ein- oder mehrphasigen - meist einem dreiphasigen - Energieversorgungsnetz gespeist, wobei es z.B. durch immer häufigeren Entfall einer Verschienung des Nullleiters bei elektrischen Anlagen zunehmend nötig ist, Stromversorgungen zu verwenden, welche beispielsweise aus einer dreiphasigen Wechselspannung von 400 bis 500V eine 24V-Gleichspannung erzeugen können. Derartige Stromversorgungen sind nicht selten aus Effizienzgründen mehrstufig aufgebaut. Dabei ist als Eingangsstufe bzw. Eingangskreis häufig eine Gleichrichtereinheit vorgesehen, von welcher die Wechselspannung aus dem Energieversorgungsnetz in eine üblicherweise unstabilisierte bzw. ungeregelte Gleichspannung als Eingangsspannung für die Stromversorgung umgewandelt wird. Weiterhin kann eine Zwischenstufe bzw. ein Zwischenkreis als Eingangsschaltung für die Stromversorgung vorgesehen sein, von welcher die unstabilisierte bzw. ungeregelte Eingangsspannung in eine stabilisierte bzw. geregelte Zwischenspannung umgewandelt wird, damit beispielsweise eine danach angeordnete effiziente Wandlerstufe eine definierte Eingangsspannung erhält. Von dieser Wandlerstufe wird dann aus der geregelten Zwischenkreisspannung die vordefinierte Ausgangsspannung zur Versorgung von Verbrauchern generiert.

Durch eine Zunahme an Leistungselektronik und eine steigende Komplexität der elektrischen Anlagen, vor allem im Bereich der Automatisierungstechnik, können zunehmend weiter Netzrückwirkungen der diversen an das Versorgungsnetz angebundenen Geräte bzw. Verbraucher (z.B. Motoren, Stromversorgungen, etc.) auftreten. Diese können z.B. zu Überlagerungen der am Versorgungsnetz aufgeprägten Störungen und damit wieder zu einer höheren Belastung der angeschlossenen Verbraucher führen. Insbesondere Verbraucher mit einer verhältnismäßig geringen Leistung wie z.B. Stromversorgungen sind meist kaum in der Lage, auftretenden Störungen wie z.B. Überspannungen zu begrenzen oder abzuleiten. Insbesondere bei Schalthandlungen am Versorgungsnetz (z.B. Auslösen einer Sicherung, Weg- oder Anschalten einer großen Last, etc.) können insbesondere durch eine induktive Wirkung von längeren Zuleitungen, durch welche versucht wird, den Strom aufrecht zu erhalten, Überspannungsimpulse erzeugt werden, welchen auch Verbraucher mit verhältnismäßig geringer Leistung wie z.B. Stromversorgungen standhalten müssen, und welche meist wesentlich größer als die Sinusscheitelspannung der vorgegebenen Versorgungsspannung bzw. Netzspannung (z.B. 400 bis 500V) sind.

Bei Stromversorgungen, welche an ein dreiphasiges Versorgungsnetz angebunden sind, ist es heutzutage üblich z.B. in der Eingangsstufe so genannte Varistoren zur Überspannungsbegrenzung einzusetzen. Ein Varistor ist ein elektronisches Bauteil, welches sich durch einen spannungsabhängigen Widerstand auszeichnet. In einem Normalbetrieb (z.B. bei vorgegebener Netzspannung) ist der Widerstand eines Varistors sehr groß, sodass er ein Verhalten einer Schaltung nicht beeinflusst. Oberhalb einer vorgegebenen Schwellspannung, welche für den jeweiligen Varistor typisch ist, bzw. bei einer Überspannung wird der differentielle Widerstand des Varistors mit steigender anliegender Spannung fast verzögerungsfrei relativ klein. Dadurch eignen sich Varistoren zum Schutz vor Überspannungen von empfindlichen Schaltungen wie z.B. einer Stromversorgung. Durch den eingangsseitigen Einsatz von Varistoren in einer Stromversorgung können z.B. sehr hohe Ströme abgeleitet und vom Versorgungsnetz kommende Überspannungsimpulse durch Aufbau einer großen Impuls-Verlustleistung begrenzt werden.

Nachteilig am Einsatz von Varistoren sind allerdings eine technologisch bedingte große Toleranz einer Ansprechspannung und ein verbleibender Innenwiderstand, welcher beim Fließen großer Ströme auch einen deutlichen Anstieg der Spannung bewirkt, welche benötigt wird, um einen Strom ableiten zu können. Diese Spannung wird üblicherweise als Schutzpegel bezeichnet. Das bedeutet, dass eine Stromversorgung, welche für eine Versorgung mit einer Wechselspannung von 500V dimensioniert ist und von welcher z.B. Sicherheitsnormen wie z.B. so genannte UL508 (UL steht für Unterwriters Laboratories Inc.® - einer der weltweit führenden Organisationen für die Prüfung und Zertifizierung im Bereich der Produktsicherheit) eingehalten werden sollen, auf Spannungsspitzenwerte im Überspannungsfall von bis zu ca. 2000 V ausgelegt sein muss. Durch Einhaltung der Sicherheitsnormen (z.B. UL508) wird z.B. eine Varistornennspannung von mindestens 20% oberhalb der vorgegebenen Versorgungsspannung (z.B. 500V Wechselspannung) vorgegeben - d.h. die Varistornennspannung muss z.B. zumindest 600V Wechselspannung betragen. Am Markt verfügbare Varistoren, welche eine derartige Varistornennspannung (z.B. 625V Wechselspannung) aufweisen, haben z.B. bei hohen Begrenzungsströmen (z.B. bei 1000 Ampere und mehr) einen Schutzpegel in einem Bereich von ca. 1800 bis 2000V Spitzenwert, auf welchen dann die Stromversorgung für den Überspannungsfall ausgelegt sein muss - insbesondere damit die Wandlerstufe keinen Schaden nimmt.

Aus der Schrift DE 200 10 283 U1 ist beispielsweise eine Stromversorgung mit verlustarmer Einschaltstrombegrenzung bekannt, bei welcher ein Strombegrenzungselement, wie z.B. ein Feldeffekttransistor oder Bipolartransistor mit isolierter Gate-Elektrode (IGBT), in der Gleichspannungsleitung nach einem Gleichrichter angeordnet ist. Mit Hilfe eines Stromsensors wird ein Strom durch den leitend geschalteten Transistor und mittels eines Spannungsfühlers eine Spannung am Transistor gemessen. Die Signale der beiden Messeinrichtungen werden miteinander verknüpft und in ein Ansteuersignal für den Transistor umgewandelt. Tritt nun beispielsweise ein Spannungssprung am Eingang der Stromversorgung (z.B. Einschaltvorgang, Spannungsspitz während des Betriebs) auf, so kann dieser zu einem relativ hohen Strom über den Transistor führen, welche mit Hilfe des Stromsensors erkannt wird. Der Transistor wird dann in einen Linearbetrieb gesteuert und begrenzt somit den in die Schaltung fließenden Strom. Diese Methode ist allerdings nur bei relativ kleinen Eingangsspannungen (z.B. bis zu ca. 200V) und zu begrenzenden Strömen mit geringen Werten einsetzbar, da der Transistor (z.B. MOS-FET, IGBT) im Linearbetrieb nur eine begrenzte Leistungsfähigkeit aufweist.

Bei einer Energieversorgung durch ein dreiphasiges Netz mit z.B. einer Wechselspannung bis über 500V wird der Transistor, welcher insbesondere als IGBT ausgeführt ist, beispielsweise ab einer vorgebbaren Differenzspannung (z.B. 50V) gesperrt, um ihn vor zu großer Verlustleistung im Linearbetrieb zu schützen. Für die Aufladung eines Zwischenkreiskondensators kann z.B. ein Widerstand parallel zum Transistor angeordnet werden. Diese Abwandlung der aus der Schrift DE 200 10 283 U1 bekannten Stromversorgung weist allerdings den Nachteil auf, dass z.B. im Überspannungsfall erst bei Auftreten relativ hoher Ströme über den Transistor abgeschaltet wird, und dass relativ hohe Energie in der Stromversorgung gegebenenfalls beim Abschalten interne Überspannungen erzeugen werden können. Weiterhin weist die Stromversorgung einen relativ hohen Oberwellenanteil auf und damit einen Bedarf nach z.B. einer Blechkerndrossel, welcher meist eine relativ große Baugröße aufweist und zu zusätzlicher Verlustleistung der Stromversorgung führt.

Da Geräte wie z.B. Stromversorgungen eine nicht lineare Lastkennlinie aufweisen, kann es selbst bei einer rein sinusförmigen Versorgungsspannung zu verzerrten Strom- und Spannungsverläufen am Eingang bzw. zu Stromoberschwingungen bzw. Stromoberwellen kommen. Dadurch wird die Netzspannung beeinflusst und die Oberwellen können zu Störungen im jeweiligen Versorgungsnetz und damit bei weiteren daran angeschlossenen Geräten führen. Daher werden bei Stromversorgungen üblicherweise meist nach der Eingangsstufe bzw. der Gleichrichtereinheit Filter zur Oberwellenbegrenzung eingesetzt. Als passive Filter zur Oberwellenbegrenzung können beispielsweise Drosseln mit großer Induktivität verwendet werden. Diese passiven Filter zur Oberwellenbegrenzung sind zwar einfach herstellbar, erzielen allerdings nur mäßig gute Ergebnisse. D.h. mittels einer Drossel können die Oberwellen nur mit bedingter Wirksamkeit reduziert werden. Weiterhin ist meist wegen der relativ niedrigen Frequenz der Versorgungsspannung eine Drossel mit relativ großer Baugröße erforderlich.

Eine weitere Möglichkeit zur Begrenzung der Oberwellen stellt ein Einsatz eines aktiven Filters zur Oberwellenbegrenzung dar, welches dafür sorgt, dass ein aufgenommener Strom weitgehend der sinusförmigen Netzspannung entspricht. Als derartiger Filter können beispielsweise Schaltwandler eingesetzt werden, welche z.B. nach der Eingangsstufe bzw. der Gleichrichtereinheit oder in einer Zwischenstufe der Stromversorgung angeordnet sein können. Der Schaltwandler kann z.B. als Hochsetzsteller ausgeführt sein, bei welchen ein Betrag einer Ausgangsspannung stets größer als ein Betrag einer Eingangsspannung ist. Dies hat bei relativ großen Eingangsspannungen - wie z.B. bei einer Netzspannung vom 400 bis 500V Wechselspannung - den Nachteil, dass für die auf den Hochsetzsteller folgende Stufe der Stromversorgung die Eingangsspannung weiter angehoben wird.

Hochsetzsteller sind üblicherweise für eine Verwendung an einem einphasigen Netz ausgelegt, wobei von ihnen eine Stromaufnahme direkt der Netzspannung nachgeführt und eine sehr stark sinusähnliche Stromform erzielt wird. Bei einer dreiphasigen Netzspannung wird üblicherweise z.B. wegen der unterschiedlichen Potentiale der einzelnen Phasen zueinander eine Brückenschaltung verwendet, um in allen drei Phasen einen sinusförmigen Strom zu erzielen. Derartige Brückenschaltungen bestehen meist aus sechs individuell ansteuerbaren Schaltelementen (z.B. MOS-FETs, IGBTs, etc.) und pro Phase einer jeweils vorgeschalteten Induktivität. Durch eine geeignete Ansteuerung der sechs Schaltelemente mit einer deutlich höheren Schaltfrequenz als einer Frequenz der versorgenden Netzwechselspannung kann die gewünschte Stromform erreicht werden. Derartige Schaltungen sind allerdings sehr bauteilintensiv und benötigen außerdem eine aufwändige Ansteuerschaltung, welche heutzutage meist als Mikroprozessorschaltung ausgeführt ist. Aufgrund des hohen Aufwands werden derartige Schaltungen z.B. vorwiegend in Großumrichtern eingesetzt, da bereits kleine Abweichungen des Stroms von einer Sinusform signifikante Auswirkungen auf eine Netzqualität hätten.

Eine weitere Möglichkeit, welche einen geringeren Aufwand aufweist, bietet eine Entnahme des Versorgungsstroms für die Stromversorgung hinter einer passiven dreiphasigen Gleichrichterbrücke. Dabei sind jedoch größere Kapazitäten am Ausgang der Gleichrichterbrücke zu vermeiden. Von der Gleichrichterbrücke wird eine Gleichspannung mit einer Welligkeit zur Verfügung gestellt, durch welche der Stromaufnahme-Charakter der angeschlossenen Schaltung noch einen nennenswerten Einfluss auf die Gesamtoberwellen aufweist. D.h., dass beispielsweise je mehr der aufgenommene Strom der welligen Ausgangsspannung der Gleichrichterbrücke folgt, desto geringer sind die Oberwellen. Da von der Gleichrichterbrücke üblicherweise nur die jeweils höchsten Abschnitte der Netzphasen durchgeschaltet werden, welche bei echter sinusförmiger Belastung auch den höchsten Stromfluss hervorrufen würden, weist ein der Spannung folgender Eingangsstrom - trotz der kurzen Stromflusszeiten pro Phase - einen deutlichen Oberwellen reduzierenden Effekt auf.

Aus den Schrift DE 10 2005 002 360 A1 ist beispielsweise ein Einsatz eines Tiefsetzstellers zur Reduktion von harmonischen Oberschwingungen der Netzstromaufnahme von getakteten Stromversorgungen bekannt. Allerdings sind die heutzutage üblicherweise eingesetzten Schalttransistoren für hohe Sperrspannungen im Überspannungsfall nicht ausgelegt. Schalttransistoren mit hohen Sperrspannungen (z.B. von 1500V) andererseits weisen sehr hohe Einschaltwiderstände auf oder sind z.B. nur für eher geringe Schaltfrequenzen (z.B. bis zu 20kHz) geeignet, wodurch es z.B. hohen Schaltverlusten kommen kann und/oder Anforderungen nach kompakten Baugrößen von Stromversorgungen nur schwer erfüllbar sind.

Aus der Schrift DE 10 2004 059 455 A1 ist eine Schaltungsanordnung zur Überspannungserkennung bekannt, bei welcher eine Transientenausblendung mit einem Schalter (z.B. IGBT) einer Gleichrichtereinheit und einem Filter nachgeordnet ist, um durch Sperren des Schalters ein Vordringen einer Überspannung an eine Ausgangsstufe der Schaltungsanordnung zu verhindern. Ein Abschaltbefehl für den Schalter wird bei Überschreiten eines Spannungsgrenzwertes an den Schalter gesendet, wobei eine Spannung am Eingang und am Ausgang des Filters gemessen wird. Die Ausgangsstufe ist beispielsweise als Tiefsetzsteller ausgestaltet, welcher z.B. einen MOS-FET als Schalter umfasst, und z.B. auch zum Reduzieren von Oberwellen einsetzbar wäre. Zusätzlich kann parallel zum Ausgang der Transientenausblendung eine Reihenschaltung aus einem weiteren Schalter und einem Varistor vorgesehen werden, wobei der Schalter nur im Überspannungsfall aktiviert bzw. geschlossen und die Überspannung vom Varistor vernichtet wird. Die aus der Schrift DE 10 2004 059 455 A1 bekannte Schaltungsanordnung weist allerdings durch die beiden Schalter (IGBT, MOS-FET) relativ hohe Einschaltverluste auf, durch welche ein Wirkungsgrad der Schaltungsanordnung reduziert wird, weshalb eine weitere nicht-massebezogene, potentialfreie bzw. so genannte floatende Ansteuerung der Schalter erforderlich ist.

## Darstellung der Erfindung

Der Erfindung liegt daher die Aufgabe zugrunde, eine Eingangsschaltung für eine Stromversorgung zu anzugeben, welche eine hohe Effizienz und hohe Spannungsfestigkeit im Überspannungsfall sowie Verbesserungen gegenüber dem Stand der Technik aufweist.

Diese Aufgabe wird durch eine Eingangsschaltung der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch eine Eingangsschaltung für eine Stromversorgung, wobei diese Eingangsschaltung zumindest ein eingangsseitig angeordnetes Schaltelement, eine mit diesem Schaltelement in Serie angeordnete Induktivität sowie eine aktive Schaltereinheit aufweist. Durch periodisches Schalten des Schaltelements zwischen einem leitenden und einem gesperrten Zustand wird eine Eingangsspannung der Eingangsschaltung auf eine Ausgangsspannung der Eingangsschaltung umgesetzt, wobei die Ausgangsspannung an einer ausgangsseitig angeordneten Kapazität zur Verfügung gestellt wird. Während einer Schaltperiode des Schaltelements wird die Induktivität zumindest teilweise von einem Strom durchflossen, welcher die ausgangsseitig angeordnete Kapazität auflädt. Bei gesperrtem Zustand des Schaltelements wird der Strom von der aktiven Schaltereinheit übernommen. Weiterhin ist im gesperrten Zustand des Schaltelements und bei Überschreiten einer vorgegebenen Durchbruchsspannung am Schaltelement ein Stromfluss über das Schaltelement zugelassen, wobei die vorgegebene Durchbruchsspannung höher bzw. größer als eine Dauerbetriebsspannung des Schaltelements ist. Bei Erkennen einer Überspannung auf einer Eingangsseite der Eingangsschaltung ist das Schaltelement in den gesperrten Zustand schaltbar. Der Stromfluss über das Schaltelement ist an die Induktivität weiterleitbar und schaltet die aktive Schaltereinheit ab. Dabei sind das Schaltelement und die Induktivität derart dimensioniert, dass bei Auftreten der Überspannung eine so genannte Avalanche-Energie am Schaltelement entsteht, bei welcher das Schaltelement einem durch die Induktivität fließenden Strom für eine Dauer der Überspannung standhält.

Der Hauptaspekt der erfindungsgemäß vorgeschlagenen Lösung besteht darin, dass ausgenutzt wird, dass im gesperrten Zustand über das Schaltelement ein Stromfluss ermöglicht wird, wenn im gesperrten Zustand des Schaltelements die am Schaltelement anliegende Spannung eine vorgegebene Durchbruchsspannung überschreitet. Die vorgegebene Durchbruchsspannung liegt dabei oberhalb der Dauerbetriebsspannung bzw. Nennspannung des Schaltelements. Die vorgegebene Durchbruchsspannung ist dabei jener Spannungswert, ab welchem der Stromfluss über das Schaltelement zugelassen ist, wobei durch diesen Stromfluss eine Verlustenergie (z.B. in Form von Wärme) im Schaltelement erzeugt wird. Diese Verlustenergie kann auch als so genannte Avalanche-Energie oder Durchbruchsenergie bezeichnet werden. In Datenblättern wird diese Energie üblicherweise mit der Abkürzung $E_{AR}$ bezeichnet und beispielsweise mit einer Erklärung "single pulse energy" versehen, welche meist bei einer Sperrschichttemperatur von 25°C angegeben ist. Typische Werte für eine zulässige Avalanche-Energie liegen üblicherweise in einem Bereich von 0,2 bis 0,5 Joule.

Das Schaltelement und die Induktivität, in welche der über das Schaltelement im gesperrten Zustand zugelassene Stromfluss weitergeleitet wird, sind dabei so dimensioniert, dass bei Auftreten einer Überspannung bzw. eines Überspannungsimpulses am Eingang der Eingangsschaltung eine Avalanche-Energie entsteht, bei welcher das Schaltelement dem durch die Induktivität fließendem Strom für die Dauer der Überspannung standhält. Im normalen, schaltenden Betrieb des Schaltelements tritt die vorgegebene Durchbruchsspannung nicht auf, da es sonst zu erheblichen und ungewollten Verlusten im Schaltelement kommen würde bzw. das Schaltelement gegebenenfalls überhitzen könnte.

Die erfindungsgemäße Eingangsschaltung hat dabei den Vorteil, dass sie eine einfach zu realisierende Schaltungstopologie und durch die entsprechende Dimensionierung von Schaltelement und Induktivität eine hohe Spannungsfestigkeit im Überspannungsfall aufweist, wodurch z.B. ein Einsatz in Versorgungsnetzen mit 400 bis 500V Wechselspannung ohne Probleme im Überspannungsfall ermöglicht. Weiterhin weist die erfindungsgemäße Eingangsschaltung aufgrund der Einfachheit der Schaltung bzw. der verwendeten Bauteile einen hohe Effizienz bzw. eine sehr guten und hohen Wirkungsgrad auf, da beispielsweise für den Überspannungsschutz keine zusätzlichen Schalter wie z.B. IGBT eingesetzt werden, welche Durchlass- und Ansteuerverluste aufweisen. Zusätzlich weist die Eingangsschaltung eine Baugröße auf, welche einfach und ohne zusätzlichen Platzbedarf z.B. in einem Schaltschrank eingebaut werden kann.

Es ist weiterhin vorteilhaft, wenn zusätzlich das Schaltelement und die Induktivität derart dimensioniert sind, dass die vorgegebene Durchbruchsspannung am Schaltelement und die Ausgangsspannung mindestens einen Summenwert ergeben, bei welchem der durch die Induktivität fließende Strom bei Auftreten einer maximal zu erwartenden Überspannung unterhalb eines vorgebbaren Maximalwertes bleibt. Dadurch wird die Spannungsfestigkeit der Eingangsschaltung auf einfache Weise zusätzlich erhöht. Es wird durch die entsprechende Dimensionierung des Schaltelements und der Induktivität dafür gesorgt, dass durch die Induktivität ein Strom mit einem vorgebbaren Maximalwert fließt, wodurch auch der Stromfluss über das Schaltelement im Überspannungsfall begrenzt wird. D.h. das Schaltelement kann für die Dauer der Überspannung dem durch die Induktivität fließendem Strom noch leichter und besser standhalten.

Eine zweckmäßige Ausgestaltung der erfindungsgemäßen Eingangsschaltung sieht vor, dass eine Ansteuereinheit zum Ansteuern des Schaltelements vorgesehen ist. Durch die Ansteuereinheit kann das Schaltelement beispielsweise im Normalbetrieb vom leitenden Zustand in den gesperrten Zustand oder vom gesperrten Zustand in den leitenden Zustand versetzt werden. Dazu kann von der Ansteuereinheit z.B. über eine Rückkopplung die Ausgangsspannung der Eingangsschaltung herangezogen werden, um diese auf einen vorgegebenen Wert zu regeln. Weiterhin kann die Ansteuereinheit z.B. dazu genutzt werden, um das Schaltelement bei Erkennen einer Überspannung an der Eingangsseite der Eingangsschaltung in den gesperrten Zustand zu versetzen.

Zum Erkennen einer Überspannung an der Eingangsseite der Eingangsschaltung ist eine Komparatoreinheit vorgesehen, welche beispielsweise als eigenständige Einheit realisiert oder in die Ansteuereinheit integriert sein kann. Eine eingangsseitige Überspannung ist von der Komparatoreinheit z.B. mittels Spannungsüberwachung erkennbar. Dazu ist der Komparatoreinheit ein mittelbar oder unmittelbar an der Eingangsseite der Eingangsschaltung ermittelter Spannungswert zuführbar, wobei dieser Spannungsmesswert mit einem vorgebbaren Referenzewert verglichen wird. Als vorgebbarer Referenzwert zum Vergleichen mit dem ermittelten Spannungsmesswert kann beispielsweise der Wert der vorgegebenen Durchbruchsspannung am Schaltelement oder ein etwas niedriger Wert verwendet werden. Das Schaltelement wird dann bei Überschreiten des vorgebbaren Referenzwertes durch den ermittelten und der Komparatoreinheit zugeführten Spannungsmesswert z.B. mittels der Ansteuereinheit in den gesperrten Zustand versetzt. Damit wird idealerweise ein Abschaltbefehl an das Schaltelement gesendet, bevor es zu einer Ausbildung eines großen Stroms kommen kann.

Alternativ kann die Komparatoreinheit auch derart ausgestaltet sein, dass eine eingangsseitige Überspannung auf Basis eines sich in der Folge bzw. aufgrund der Überspannung aufbauenden Stroms erkannt werden kann. Dazu ist der Komparatoreinheit ein mittels eines Stromsensors ermittelter Strommesswert zuführbar. Der ermittelte Strommesswert wird dann mit einem vorgebbaren Referenzwert verglichen und das Schaltelement bei Überschreiten des vorgebbaren Referenzwertes durch den ermittelten und der Komparatoreinheit zugeführten Strommesswert z.B. mittels der Ansteuereinheit in den gesperrten Zustand versetzt. Der Stromsensor zum Ermitteln des Strommesswertes ist dazu beispielsweise in einem Strompfad angeordnet, welcher den Stromfluss durch das Schaltelement umfasst, welcher im gesperrten Zustand bei Überschreiten der vorgegebenen Durchbruchsspannung am Schaltelement zugelassen ist. Bei Nutzung von Strommesswerten zur Schalten des Schaltelements in den gesperrten Zustand kann in vorteilhafter Weise bei Überspannung sehr rasch auf den sich aufbauenden Strom reagiert werden, da ein aktuell fließender Strom - sofern dieser den vorgebbaren Referenzwert überschreitet - mit geringer bis keiner Verzögerung abgeschaltet wird.

Es ist vorteilhaft, wenn das Schaltelement als Halbleiterschalter, insbesondere ein Metalloxid-Feldeffekt-Transistor oder MOS-FET, auf Silizium-Karbid-Basis ausgeführt ist. Transistoren auf Silizium-Karbid-Basis (SiC) wie z.B. SiC-MOS-FET sind aufgrund einer guten Wärmeleitfähigkeit beispielsweise für Anwendungen geeignet, bei denen hohe Temperaturen ausgehalten werden müssen. D.h. SiC-basierte Halbleiterschalter sind z.B. geeignet, höhere Sperrspannungen auszuhalten. Idealerweise weist der Halbleiterschalter auf Silizium-Karbid-Basis ein als Bauteilkennwert vorgegebenes Mindest-Aufnahmevermögen für die so genannte Avalanche-Energie wie z.B. ein so genanntes Avalanche-Rating auf. Damit können die Eingangsschaltung und insbesondere das Schaltelement sehr einfach für zu erwartende Überspannungsereignisse bzw. zu erwartenden maximale Überspannungswerte ausgelegt werden.

Alternativ kann das Schaltelement aus einem Halbleiterschalter und einer zum Halbleiterschalter parallel angeordneten Einheit zur Begrenzung und Aufnahme der Avalanche-Energie im Überspannungsfall bestehen. Durch die parallel angeordnete Einheit zur Begrenzung und Aufnahme der Avalanche-Energie wird der Halbleiterschalter von der Aufnahme der Avalanche-Energie entlastet, da im Überspannungsfall der Halbleiterschalter in den gesperrten Zustand versetzt und der Stromfluss in die Induktivität hauptsächlich über die parallel angeordnete Einheit zur Begrenzung und Aufnahme der Avalanche-Energie zugelassen wird. Die im Schaltelement gesamt umgesetzte Avalanche-Energie wird dabei vor allem durch die Höhe und Dauer der Überspannung, durch die Dimensionierung der Induktivität und einen Strom definiert, welcher davor in der Induktivität geflossen ist. Als Halbleiterschalter kann beispielsweise ein Schalttransistor mit Avalanche-Rating - wie z.B. Silizium-basierte MOS-FETs, etc. oder ohne Avalanche-Rating - wie z.B. Gallium-Nitrit-basierte Transistoren eingesetzt werden, wobei Schalttransistoren ohne Avalanche-Rating durch die Einheit zur Begrenzung und Aufnahme der Avalanche-Energie besonders vor Überspannungen geschützt werden müssen.

Die Einheit zur Begrenzung und Aufnahme der so genannten Avalanche-Energie kann dabei in vorteilhafter Weise als so genannte Suppressor-Diode ausgeführt sein, wobei z.B. eine Leistungs-Zenerdiode auf Siliziumbasis als Suppressor-Diode verwendbar ist. Durch die Suppressor-Diode wird der Halbleiterschalter des Schaltelements vor der Überspannung geschützt. Insbesondere Leistungs-Zenerdioden auf Siliziumbasis sind z.B. auf hohe Nennspannungen (z.B. bis 440V) und hohe Stromimpulse bzw. Impulsenergien ausgelegt. Die Suppressor-Diode ist dabei so ausgelegt, dass bei Überschreiten der vorgegebenen Durchbruchsspannung am Schaltelement ein Stromfluss zugelassen wird, welcher in die Induktivität der Eingangsschaltung weiterleitbar ist, und dass das Schaltelement dem durch die Induktivität fließenden Strom für die Dauer der Überspannung standhält. Das bedeutet, dass die Suppressor-Diode so ausgelegt sein sollte, dass ihre Durchbruchs- bzw. Avalanche-Spannung idealerweise unterhalb einer Zerstörgrenze des Schaltelements liegt bzw. die Suppressor-Diode so dimensioniert ist, dass es kennlinienbedingt zu einer Aufteilung der Avalanche-Energie zwischen dem Schaltelement und der Suppressor-Diode kommt und dadurch keines der beiden Bauteile überlastet wird.

Alternativ kann die Einheit zur Begrenzung und Aufnahme der Avalanche-Energie als spannungsbegrenzende Schutzbeschaltung ausgestaltet sein, welche zumindest eine Kapazität und eine Diode umfasst. Die spannungsbegrenzende Schutzbeschaltung ist dabei so ausgestaltet, dass sie über die Diode zugeschaltet werden kann und mittels der Kapazität die Funktion der Durchbruchsspannung nachgebildet wird. Zur Entladung der Kapazität kann z.B. eine Widerstand und/oder eine Zener-Diode parallel zur Kapazität angeordnet werden.

Idealerweise weist die Eingangsschaltung zumindest Tiefsetzsteller-Topologie auf. Durch den Einsatz der Tiefsetzsteller-Topologie kann einerseits eine unstabilisierte und ungeregelte Eingangsspannung in eine betragsmäßig kleinere stabilisierte und geregelte Ausgangsspannung umgesetzt werden. Weiterhin kann durch die Tiefsetzsteller-Topologie eine Reduktion der Oberwellen erzielt werden.

Weiterhin ist es günstig, wenn die aktive Schaltereinheit der Eingangsschaltung als Diode oder als so genannte Schottky-Diode ausgeführt. Eine Schottky-Diode ist eine spezielle Diode, welche anstatt eines Halbleiter-Halbleiter-Übergangs einen sperrenden Metall-Halbleiter-Übergang - den so genannten Schottky-Kontakt - besitzt und eine kleine Sättigungskapazität aufweist. Dadurch ist die Schottky-Diode als "schnelle" Diode insbesondere für Hochfrequenzanwendungen und zum Spannungsabbau von Induktivität (Freilaufdiode) besonders geeignet. Idealerweise ist die so genannte Schottky-Diode als Halbleiterbauelement auf Silizium-Karbid-Basis ausgeführt, da diese bis zu relativ hohen Sperrspannungen verfügbar sind und idealen Dioden sehr nahe kommen, da sie fast kein Vorwärts- und vor allem Rückwärts-Erholverhalten aufweisen und damit sehr rasch sperren.

Bei einer zweckmäßigen Ausgestaltung der erfindungsgemäßen Eingangsschaltung ist die ausgangsseitig angeordnete Kapazität als Keramik- oder Elektrolyt-Kondensator oder als Kunststofffolien-Kondensator ausgeführt.

Weiterhin ist das Schaltelement idealerweise in einem positiven Spannungszweig der Eingangsschaltung angeordnet. Alternativ ist auch eine Anordnung des Schaltelements in einem negativen Spannungszweig der Eingangsschaltung denkbar.

Für eine Verwendung der erfindungsgemäßen Eingangsschaltung in einer mehrstufigen Stromversorgung bzw. für eine Versorgung in einem Wechselspannungsversorgungsnetz ist der Eingangsschaltung eingangsseitig eine Gleichrichtereinheit vorgeschaltet. Idealerweise ist die Gleichrichtereinheit derart ausgestaltet, dass die Eingangsschaltung an eine zumindest zwei-phasige, aber vor allem an eine drei-phasige Spannungsversorgung angebunden werden kann. Die von der Gleichrichtereinheit gelieferte üblicherweise unstabilisierte bzw. gleichgerichtete Ausgangsspannung bildet dabei die Eingangsspannung für die erfindungsgemäße Eingangsschaltung.

Zum Schutz und zur Begrenzung von aus dem Versorgungsnetz kommenden Überspannungen kann weiterhin eingangsseitig zumindest ein Varistor vorgesehen sein. Ein Varistor ist ein elektronische Bauteil, welches sich durch einen spannungsabhängigen Widerstand auszeichnet. Durch den Einsatz von zumindest einem Varistor kann ein Überspannungsimpuls durch Aufbau einer großen Impuls-Verlustleistung auf einen vorgebbaren bzw. einschätzbaren Überspannungswert begrenzt werden.

Weiterhin kann bei Verwendung der erfindungsgemäßen Eingangsschaltung in einer mehrstufig ausgeführten Stromversorgung eine Wandlerstufe, insbesondere eine potential-trennende Wandlerstufe nachgeordnet sein. Die Eingangsspannung dieser Wandlerstufe wird von der Ausgangsspannung der Eingangsschaltung gebildet, welche an der Kapazität zur Verfügung gestellt wird. Dabei wird die nachgeordnete Wandlerstufe in vorteilhafter Weise durch die erfindungsgemäße Eingangsschaltung vor Überspannungen geschützt.

## Kurzbeschreibung der Zeichnung

Die Erfindung wird nachfolgend in beispielhafter Weise anhand der beigefügten Figuren erläutert. Es zeigen dabei:

Figur 1 schematisch eine beispielhafte Ausführungsform der erfindungsgemäßen Eingangsschaltung für eine Stromversorgung

Figur 2 schematisch eine weitere beispielhafte Ausführungsform der erfindungsgemäßen Eingangsschaltung für eine Stromversorgung

Figur 3 beispielhaft zeitliche Verläufe von Spannungen und Strömen in der erfindungsgemäßen Eingangsschaltung während einer eingangsseitigen Überspannung

Figur 4 schematisch und beispielhaft eine Verwendung der erfindungsgemäßen Eingangsschaltung in einer dreiphasigen Stromversorgung

## Ausführung der Erfindung

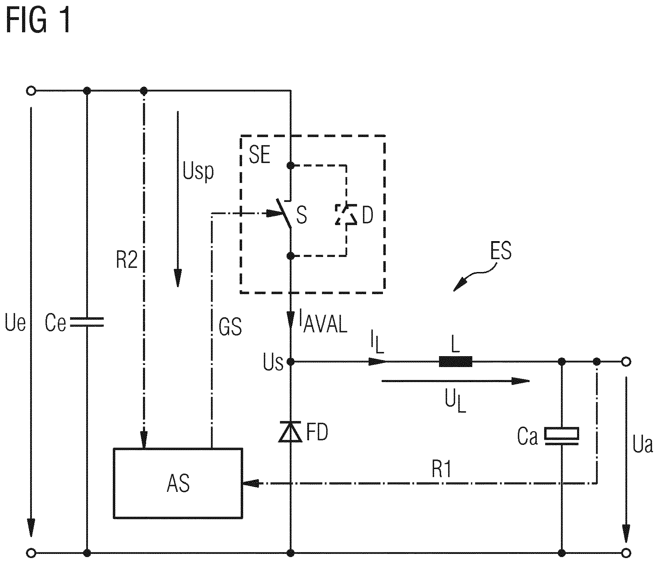

Figur 1 zeigt schematisch und beispielhaft eine Ausführungsform der erfindungsgemäßen Eingangsschaltung ES für eine Stromversorgung, welche z.B. an ein ein- oder mehrphasiges, insbesondere zumindest zwei- oder dreiphasiges, Energieversorgungsnetz angebunden sein kann. Die Eingangsschaltung ES weist z.B. zumindest eine Schaltungstopologie eines Tiefsetzstellers auf. Alternativ kann die Eingangsschaltung allerdings auch als Kombination aus Tiefsetzsteller und Hochsetzsteller ausgestaltet sein. Auf einer Eingangsseite der Eingangsschaltung ES ist eine Eingangskapazität Ce angeordnet, an welcher eine meist unstabilisierte bzw. ungeregelte Eingangsspannung Ue anliegt. Die Eingangsspannung Ue kann beispielsweise von einer Eingangsstufe der Stromversorgung, durch welche eine Anbindung an das Energieversorgungsnetz erfolgt, zur Verfügung gestellt werden.

Die Eingangskapazität Ce hat dabei z.B. die Funktion der Eingangsschaltung ES, welche mit einer deutlich höheren Frequenz als die Netzfrequenz der Eingangsspannung Ue (z.B. Faktor 1000) arbeitet, die hochfrequenten Impulsströme zur Verfügung zu stellen. Eine Größe der Eingangskapazität C ist dabei beispielsweise so bemessen, dass von der gesamten Eingangsschaltung ES die vorgebbaren Grenzwerte der Netzstrom-Oberwellen nicht überschritten werden.

Weiterhin weist die Eingangsschaltung ES ein eingangsseitig angeordnetes Schaltelement SE auf, welche z.B. in einem positiven Spannungszweig oder in einem negativen Spannungszweig der Eingangsschaltung angeordnet sein kann. Den Schaltelement SE ist direkt oder indirekt eine Induktivität L nachgeordnet. Weiterhin umfasst die Eingangsschaltung ES eine aktive Schaltereinheit FD, welche beispielsweise schaltungstechnisch mit dem Schaltelement SE in Serie bzw. zur Induktivität L parallel angeordnet befinden kann. Die aktive Schaltereinheit FD ist z.B. als Diode oder als so genannte Schottky-Diode ausgeführt, welche idealerweise sehr rasch in einen Sperrzustand geschaltet werden kann bzw. eine sehr geringe Sperrverzugszeit aufweist. Die Schottky-Diode FD kann z.B. als Halbleiterbauelement auf Silizium-Karbid-Basis ausgeführt sein.

Ausgangsseitig ist eine Ausgangs- bzw. Zwischenkreiskapazität Ca angeordnet, an welcher ein üblicherweise stabilisierte bzw. geregelte Ausgangsspannung Ua der Eingangsschaltung ES beispielsweise für einen angebundenen Verbraucher oder bei einer mehrstufigen Stromversorgung für eine nachgeordnete Wandlerstufe zur Verfügung gestellt wird. Schaltungstechnisch kann die Ausgangskapazität Ca mit der Induktivität L in Serie und damit parallel zur aktiven Schaltereinheit FD angeordnet sein. Weiterhin kann die Kapazität Ca z.B. als Keramikkondensator, Eletrolyt-Kondensator oder als Kunststofffolien-Kondensator ausgeführt sein.

Weiterhin weist die Eingangsschaltung ES eine Ansteuereinheit AS auf, von welcher auf Basis von Steuergrößen R1, R2 Ansteuerimpulse GS für das Schaltelement SE generiert werden. In einem Normalbetrieb der Eingangsschaltung ES wird beispielsweise durch periodisches Schalten des Schaltelements SE die eingangsseitig anliegende Eingangsspannung Ue in die stabilisierte bzw. geregelte Ausgangsspannung Ua umgesetzt, welche üblicherweise betragsmäßig kleiner als die Eingangsspannung Ue ist. Dazu werden auf Basis einer ausgangsseitig ermittelnden ersten Steuergröße R1 (z.B. ermittelter Ausgangsspannungswert, etc.) von der Ansteuereinheit AS Ansteuerimpulse GS erzeugt. Mittels der Ansteuerimpulse GS wird das Schaltelement SE abwechselnd in einen leitenden Zustand und in einen gesperrten Zustand versetzt. D.h. das Schaltelement SE ist abwechselnd während einer Schaltperiode ein- und ausgeschaltet. Dabei ist die Induktivität L zumindest teilweise während der Schaltperiode bzw. bei eingeschaltetem Schaltelement SE von einem Strom $I_L$ durchflossen, welcher die ausgangsseitig angeordnete Kapazität Ca auflädt. Die aktive Schaltereinheit FD ist dabei gesperrt. In einem gesperrten Zustand des Schaltelements SE kommutiert der Strom $I_L$ durch Entmagnetisierung der Induktivität L in die aktive Schaltereinheit FD, wobei die in der Induktivität L gespeicherte Energie an die ausgangsseitig angeordnete Kapazität Ca abgegeben wird - bis die Induktivität L entmagnetisiert ist. Dann wird das Schaltelement SE mittels der Ansteuereinheit AS wieder in den leitenden Zustand geschaltet. Dieser Schaltvorgang des Schaltelements SE wird im Normalbetrieb der Eingangsschaltung ES periodisch wiederholt, um am Ausgang eine geregelte Ausgangsspannung Ua zur Verfügung zu stellen.

Im Überspannungsfall treten Störungen aus dem Energieversorgungsnetz in Form von Überspannungen und/oder Spannungsspitzen auf der Eingangsseite der Eingangsschaltung ES als Eingangsspannung Ue auf, wobei derartige Überspannungen z.B. mittels zumindest eines eingangsseitig angebrachten Varistors bereits (z.B. auf 2000V) begrenzt werden können. Bei Auftreten und Erkennen einer eingangsseitigen Überspannung Ue ist das Schaltelement SE über einen Ansteuerimpuls GS der Ansteuereinheit AS in den gesperrten Zustand versetzbar. Dabei fällt am Schaltelement SE einen Sperrspannung Usp ab, wobei bei Überschreiten einer vorgegebenen Durchbruchsspannung am Schaltelement, welche oberhalb einer Dauerbetriebsspannung bzw. Nennspannung des Schaltelements SE liegt, durch die Sperrspannung Usp ein Stromfluss $I_{AVAL}$ über das Schaltelement SE zugelassen ist. Ein Schaltungspunkt zwischen Schaltelement SE, Induktivität L und aktiver Schaltereinheit FD weist ein Spannungspotential Us auf. Der Stromfluss $I_{AVAL}$ über das Schaltelement SE ist in die Induktivität L weiterleitbar, an welche eine Spannung $U_L$ abfällt, und schaltet die aktive Schaltereinheit FD ab bzw. die aktive Schaltereinheit FD ist gesperrt.

Damit die Eingangsschaltung ES die für den Überspannungsfall notwendige Spannungsfestigkeit aufweist, sind das Schaltelement SE und die Induktivität derart dimensioniert, dass bei Auftreten der Überspannung eine so genannte Avalanche-Energie am Schaltelement SE entsteht, bei welcher das Schaltelement einen durch die Induktivität L fließenden Strom $I_L$ für die Dauer der Überspannung standhält. Üblicherweise sind derartig Überspannungsimpulse bzw. Surge-Spannungen nur einige $\mu$s lang

(z.B. mit einer Anstiegszeit von 1 bis 2 $\mu$s und einer Halbwertszeit von weniger als 10 $\mu$s). Die Avalanche-Energie am Schaltelement SE entsteht durch den Stromfluss $I_{AVAL}$ über das gesperrte Schaltelement z.B. in Form von Wärme, welcher das Schaltelement SE im Überspannungsfall standhalten muss. Der Stromfluss $I_{AVAL}$ und damit die Avalanche-Energie am Schaltelement SE kann durch entsprechende Dimensionierung der Induktivität L bei vorgegebener Durchbruchsspannung am Schaltelement SE beeinflusst werden.

Dazu kann das Schaltelement SE und die Induktivität L zusätzlich derart dimensioniert werden, dass die vorgegebenen Durchbruchsspannung am Schaltelement SE und die Ausgangsspannung Ua mindestens einen Summenwert ergeben, bei welchem der Strom $I_L$ bei Auftreten einer maximal zu erwartenden Überspannung unterhalb eines vorgebbaren Maximalwertes bleibt. D.h. tritt am Eingang der Eingangsschaltung ES beispielsweise eine Überspannung Ue, welche beispielsweise mittels zumindest eines Varistors auf 2000V begrenzt ist, so fällt an der Induktivität L eine Spannung $U_L$ ab, welche sich auch einer Differenz der Eingangsspannung Ue, der vorgegebenen Durchbruchsspannung bzw. der Sperrspannung Usp am Schaltelement SE und der Ausgangsspannung Ua ergibt, welche annähernd konstant (z.B. 400V) ist. Durch Vorgabe eines Maximalwerts des durch die Induktivität L fließenden Stroms $I_L$ und bei ermittelbarer Spannung $U_L$ am der Induktivität L kann die Induktivität L sehr einfach dimensioniert werden. Die Durchbruchsspannung Usp am Schaltelement SE kann z.B. durch Auswahl bzw. Ausgestaltung des Schaltelements SE vorgegeben werden.

Bei einer eingangsseitigen Überspannung Ue von z.B. 2000V, welche z.B. 20ps anliegt, und bei einer Ausgangsspannung Ua von z.B. 400V sowie einer vorgegebenen Durchbruchsspannung Usp am Schaltelement SE von z.B. 1200V, verbleiben beispielsweise als Spannungsabfall $U_L$ an der Induktivität L z.B. 400V, durch welche die Induktivität L aufmagnetisiert wird. Entsprechend der Formel $U_L = L*di/dt$ kann ein Strom $I_L$ in der Induktivität nach Umformung auf $I_L = (U/L)*t$ ermittelt werden. Bei bekannter Spannung $U_L$ und einem vorgebbaren Maximalwert für den Strom $I_L$ kann daraus eine Dimensionierung für die Induktivität L bestimmt werden.

Zum Erkennen einer eingangsseitigen Überspannung ist in der Eingangsschaltung ES eine Komparatoreinheit vorgesehen. Diese kann als eigenständige Einheit ausgestaltet oder in die Ansteuereinheit AS integriert sein. Von der Komparatoreinheit wird eine zweite Steuergröße R2 herangezogen, auf deren Basis ein Ansteuerimpuls GS von der Ansteuereinheit AS erzeugt wird, durch welchen das Schaltelement SE in einen gesperrten Zustand versetzt wird. Als zweite Steuergröße R2 ist beispielsweise ein Spannungsmesswert oder ein Strommesswert verwendbar.

Bei einem Spannungsmesswert als zweite Steuergröße R2 wird dieser z.B. mittelbar oder unmittelbar an der Eingangsseite der Eingangsschaltung ermittelt. Es kann z.B. direkt am Eingang der Eingangsschaltung die Eingangsspannung Ue oder z.B. eine Spannung bereits am Ausgang einer eventuell vorgeschalteten Stufe ermittelt werden. Der ermittelte Spannungsmesswert ist der Komparatoreinheit dann derart zuführbar, dass der zugeführte Spannungsmesswert mit einem vorgebbaren Referenzwert, welcher über einer für den Normalbetrieb üblichen Eingangsspannung Ue und maximal die vorgegebenen Durchbruchsspannung des Schaltelements SE betragen kann, verglichen wird. Bei Überschreiten des vorgebbaren Referenzwerts wird das Schaltelement SE in den gesperrten Zustand versetzt.

Wird alternativ ein Strommesswert zur Erkennung einer eingangsseitigen Überspannung Ue als zweite Steuergröße R2 verwendet, so ist dazu ein Strom heranziehbar, welcher sich in Folge der Überspannung Ue aufbaut. Dazu kann der Strommesswert mit einem Stromsensor ermittelt werden, wobei der Stromsensor z.B. in einem Strompfad angeordnet ist, welcher den Stromfluss $I_{AVAL}$ über das Schaltelement SE umfasst. Der Strommesswert ist dann derart der Komparatoreinheit zuführbar, dass dieser Strommesswert mit einem vorgegeben Referenzwert verglichen wird. Bei Überschreiten des vorgebbaren Referenzwertes durch den ermittelten und der Komparatoreinheit zugeführten Strommesswert wird das Schaltelement SE mittels der Ansteuereinheit AS in den gesperrten Zustand versetzt. Weiterhin ist es auch möglich, dass zur Erkennung einer eingangsseitigen Überspannung Ue ein Spannungsmesswert herangezogen und mit einem vorgegebenen Referenzwert verglichen wird und zusätzlich auch eine Strommessung durchgeführt wird. Damit kann beispielsweise in Abhängigkeit einer Spannungsform und einem zeitlichen Anstieg der Überspannung Ue das Schaltelement SE dann entweder aufgrund des Spannungsmesswertes oder aufgrund der Strommessung abgeschaltet werden.

Das Schaltelement SE der erfindungsgemäßen Eingangsschaltung ES kann beispielsweise als Halbleiterschalter bzw. Schalttransistor S auf Silizium-Karbid-Basis (SiC) ausgeführt sein. Insbesondere kann der Halbleiterschalter S auf Silizium-Karbid-Basis ein Metalloxid-Feldeffekt bzw. MOS-FET bzw. ein SiC-MOS-FET sein. Dieser SiC-MOS-FET weist idealerweise als Bauteilkennwert ein vorgegebenes Mindest-Aufnahmevermögen für die Avalanche-Energie bzw. ein so genanntes Avalanche-Rating auf, wodurch das Schaltelement SE sehr einfach für den Überspannungsfall dimensionierbar ist.

Alternativ kann das Schaltelement SE - wie in Figur 1 mittels gestrichelter Linie dargestellt - aus einem Halbleiterschalter S (z.B. MOS-FET auf Silizium- oder Gallium-Nitrit-Basis) und einer parallel angeordneten Einheit D zur Begrenzung und Aufnahme der Avalanche-Energie im Überspannungsfall bestehen. Diese Einheit D kann z.B. - wie in Figur 1 dargestellt - als Suppressor-Diode D ausgeführt sein. Als Suppressor-Diode D kann z.B. eine Leistungs-Zenerdiode auf Silizium-Basis eingesetzt werden.

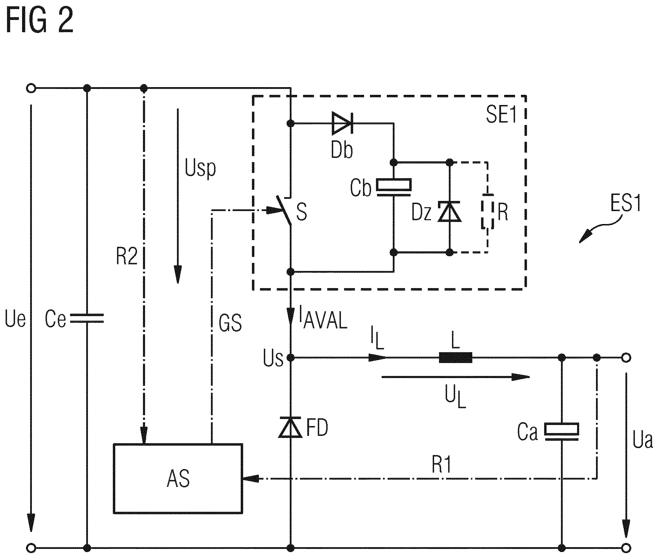

In Figur 2 ist eine weitere beispielhafte Ausführungsform der erfindungsgemäßen Eingangsschaltung ES1 schematisch dargestellt. Diese Ausführungsform ES1 entspricht bis auf die Ausgestaltung des Schaltelements SE1 der anhand der Figur 1 beschriebenen Ausführungsform der erfindungsgemäßen Eingangsschaltung ES. Das Schaltelement SE1 besteht bei dieser alternativen Ausführungsvariante ES1 aus einem Halbleiterschalter S (z.B. MOS-FET) und einer dazu parallel angeordneten spannungsbegrenzenden Schutzbeschaltung, durch welche im Überspannungsfall bei gesperrtem Halbleiterschalter S ein Stromfluss $I_{AVAL}$ zugelassen ist bzw. die Funktion einer Durchbruchspannung nachgebildet wird und der Halbleiterschalter S geschützt wird. Eine derartige Schutzbeschaltung kann z.B. zumindest eine Kapazität Cb sowie eine Diode Db umfassen, wobei die Kapazität Cb beispielsweise eine Vorladung aufweist, durch welche die vorgegebene Durchbruchspannung definierbar ist. Durch die Diode Db kann die Kapazität Cb im Überspannungsfall zugeschaltet werden. Zur Kapazität Cb kann weiterhin ein Entladewiderstand parallel angeordnet sein, welcher z.B. als Suppressor-Diode Dz oder als ohmscher Widerstand R ausgeführt sein kann.

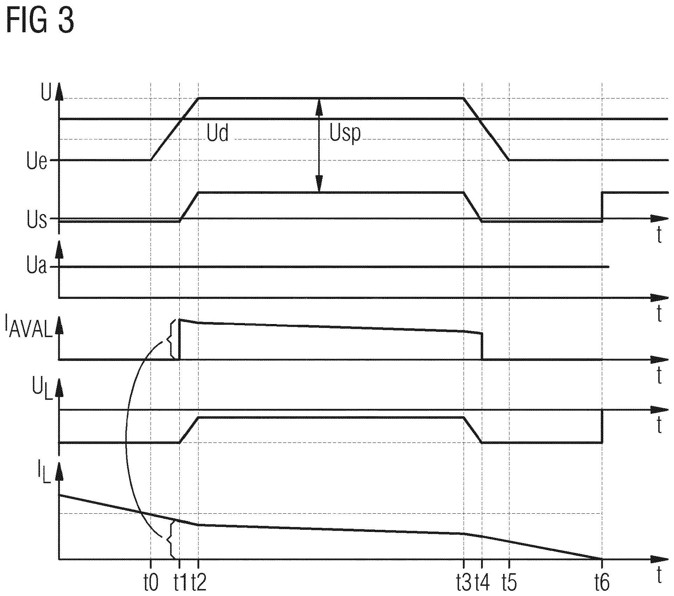

Die Figur 3 zeigt beispielhaft und schematisch zeitliche Verläufe von Spannungen und Strömen in der erfindungsgemäßen Eingangsschaltung, während eine eingangsseitige Überspannung auftritt. Dazu ist auf einer x-Achse die Zeit t aufgetragen. Auf einer y-Achse sind schematisch eine Eingangsspannung Ue der Eingangsschaltung ES, ein Spannungspotential Us am Schaltungspunkt zwischen Schaltelement SE, Induktivität L und aktiver Schaltereinheit FD, eine Ausgangsspannung Ua, ein Stromfluss $I_{AVAL}$ über das Schaltelement SE, eine Spannung $U_L$ an der Induktivität L sowie ein Strom $I_L$ in die Induktivität L aufgetragen.

Vor einem ersten Zeitpunkt t0 befindet sich die Eingangsschaltung ES im Normalbetrieb. D.h. es liegt eine für den Normalbetrieb übliche Dauerbetriebsspannung (z.B. 800V) als Eingangsspannung Ue an der Schaltung an. Das Schaltelement SE ist z.B. in den gesperrten Zustand geschaltet, wobei die gesamte Eingangsspannung Ue plus z.B. einer sehr geringen Dioden-Flussspannung der aktiven Schaltereinheit FD (z.B. 1V) am Schaltelement SE als aktuelle Sperrspannung Usp anliegt. Die jeweils aktuelle Sperrspannung Usp am Schaltelement SE ist in Figur 3 z.B. aus einem Abstand der beiden Kurven der Eingangsspannung Ue und der Spannung Us ersichtlich. Die Induktivität L wird abmagnetisiert und der Strom $I_L$ in der Induktivität L sinkt, wobei der Strom $I_L$ auch über die aktive Schaltereinheit FD fließt. Die Spannung am Potentialpunkt Us ist um die Flussspannung der aktiven Schaltereinheit FD unter 0 Volt. An der ausgangsseitig angeordneten Kapazität wird eine konstante Ausgangsspannung Ua (z.B. 400V) zur Verfügung gestellt.

Zum ersten Zeitpunkt t0 tritt eine eingangsseitige Überspannung auf, welche beispielsweise mittels eines oder mehrerer eingangsseitig angeordneten Varistoren auf einen vorgebbaren Wert (z.B. 2000V) begrenzbar ist. In der Folge der sich aufbauenden Überspannung steigt die Eingangsspannung Ue an. Die Induktivität L wird weiterhin abmagnetisiert. Die Sperrspannung Usp am Schaltelement SE steigt allerdings mit der steigenden Eingangsspannung Ue an, bis in einem zweiten Zeitpunkt t1 die aktuelle am Schaltelement anliegende Sperrspannung Usp die vorgegebene Durchbruchsspannung Ud erreicht bzw. übersteigt. Ab dem zweiten Zeitpunkt t1 stellt sich ein Stromfluss $I_{AVAL}$ am Schaltelement SE ein. Ab diesem zweiten Zeitpunkt t1 wird der Strom $I_L$, welcher durch die aktive Schaltereinheit FD fließt auf das Schaltelement SE kommutiert bzw. der Strom über die aktive Schaltereinheit FD abgeschaltet. D.h. der gesamte Strom $I_L$ über die Induktivität L fließt ab dem zweiten Zeitpunkt t1 als $I_{AVAL}$ - wie in Figur 3 dargestellt - über das Schaltelement SE. Am Schaltelement SE liegt zum zweiten Zeitpunkt t1 die vorgegebene Durchbruchsspannung Ud (z.B. 1700V) an und es entsteht dadurch im Schaltelement SE eine Verlustleistung, welche aus dem Produkt der Sperrspannung Usp mal dem Strom $I_L$ bzw. $I_{AVAL}$ gebildet wird.

An einen dritten Zeitpunkt t2 wird von der Eingangsspannung Ue beispielsweise der mittels Varistorbegrenzung vorgebbare Überspannungswert (z.B. 2000V) erreicht. Weiterhin ist bis zum dritten Zeitpunkt t2 auch die Spannung Us sowie die Spannung $U_L$ an der Induktivität L angestiegen - z.B. auf eine Differenz von Eingangsspannung Ue und der Summe aus Durchbruchsspannung Ud am Schaltelement SE und Ausgangsspannung Ua. Bei einer Eingangsspannung Ue von z.B. 2000V, einer Ausgangsspannung Ua von z.B. 400V und einer vorgegebenen Durchbruchsspannung Ud von z.B. 1700V ergibt sich z.B. eine Spannung $U_L$ an der Induktivität L von -100V. D.h. durch den Stromfluss $I_{AVAL}$ über das Schaltelement SE, welcher an die Induktivität L weitergeleitet wird, steigt die Spannung $U_L$ an der Induktivität L, welche dadurch eine niedrigere Abmagnetisierungsspannung erhält und sich dadurch nur langsam abmagnetisieren kann. Dadurch sinkt auch der Strom $I_L$ über die Induktivität L nur langsam bzw. damit auch der Stromfluss $I_{AVAL}$ über das Schaltelement SE.

In einem vierten Zeitpunkt t3 (z.B. nach 20 bis 30 $\mu$s) klingt die eingangsseitige Überspannung ab und die Eingangsspannung Ue sinkt wieder, bis in einem fünften Zeitpunkt t4 die vorgegebenen Durchbruchsspannung Ud am Schaltelement SE unterschritten wird. Zwischen dem vierten Zeitpunkt t3 und dem fünften Zeitpunkt t4 sinkt - bei konstant anzunehmender Durchbruchs- bzw. Sperrspannung Ud am Schaltelement SE - auch die Spannung Us am Schaltungspunkt zwischen Schaltelement SE, Induktivität L und aktiver Schaltereinheit FD parallel zur Eingangsspannung Ue ab. Analog dazu sinkt auch die Spannung $U_L$ an der Induktivität L wieder ab - d.h. die Induktivität L erhält ab dem vierten Zeitpunkt t3 wieder eine größere Abmagnetisierungsspannung, wodurch der Strom $I_L$ in der Induktivität L rascher sinken kann.

Ist im fünften Zeitpunkt t4 die Durchbruchsspannung Ud des Schaltelements SE erreicht bzw. unterschritten, steht der Induktivität L wieder die gesamte Abmagnetisierungsspannung $U_L$ zur Verfügung und der Strom $I_L$ kann ungestört an die ausgangsseitig angeordnete Kapazität Ca abgegeben werden. Der Strom $I_L$ sinkt nun mit einer Steigung wie vor der Überspannung, während der Stromfluss $I_{AVAL}$ über das Schaltelement SE beendet wird - d.h. das Schaltelement SE lässt ab dem fünften Zeitpunkt t4 keinen Stromfluss mehr zu.

Bei einem sechsten Zeitpunkt t5 ist die eingangsseitige Überspannung vollständig abgeklungen. Die Eingangsspannung Ue ist wieder auf die übliche Dauerbetriebsspannung (z.B. 800V) abgesunken. Die Induktivität L wird weiterhin noch abmagnetisiert, bis in einem siebenten Zeitpunkt t6 die gesamte Energie der Induktivität L an die Kapazität Ca abgegeben ist. Der Strom $I_L$ in der Induktivität L ist dann auf einen Wert 0 gesunken. Die Eingangsschaltung ES kann dann wieder im Normalbetrieb betrieben werden bzw. das Schaltelement SE mittels eines Ansteuerimpulses GS in einen leitenden Zustand geschaltet werden.

Für eine Dimensionierung der Eingangsschaltung ES wird beispielsweise zuerst die maximal zulässige Avalanche-Energie für das Schaltelement SE bzw. für die Schaltelement-Gesamtanordnung SE1 - d.h. für die das Schaltelement SE bzw. SE1 bildenden Komponenten - aus entsprechenden Datenblättern ermittelt. Dabei ist zusätzlich die im Betrieb maximal zu erwartende Arbeitstemperatur des Schaltelements SE, SE1 bzw. aller die Avalanche-Energie aufnehmenden Komponenten zu berücksichtigen. Dies kann zu einer Reduktion der zulässigen Avalanche-Energie führen.

Dann wird der maximale Stromfluss $I_{AVAL}$ ermittelt, welcher im Überspannungsfall vorgegebene Grenzwerte für das Schaltelement SE, SE1 bzw. der einzelnen das Schaltelement SE, SE1 bildende Komponenten nicht übersteigen darf. Dazu wird ein maximaler Wert des Stroms $I_L$ durch die Induktivität L am Ende einer Überspannung (d.h. im fünften Zeitpunkt t4 der Figur 3, bei welchem die Überspannung so weit abgeklungen ist, dass kein Stromfluss $I_{AVAL}$ mehr durch das Schaltelement SE, SE1 auftritt) ermittelt. Für die Ermittlung wird davon ausgegangen, dass die Induktivität L zum Zeitpunkt, an welchem eine Überspannung zu einem Stromfluss $I_{AVAL}$ durch das Schaltelement SE, SE1 führt (d.h. im zweiten Zeitpunkt t1 der Figur 3 - bei welchem die Eingangsspannung/Überspannung Ue eine Durchbruchsspannung Ud des Schaltelements SE, SE1 übersteigt), bedingt durch eine vorangegangene Schaltperiode einen Strom $I_L$ führt. Abhängig von der Höhe der Überspannung und der Begrenzungsspannung des Schaltelements SE, SE1 wird im Laufe der auftretenden Überspannung der Strom $I_L$ in der Induktivität L entweder verlangsamt sinken oder noch weiter ansteigen. Um alle Fälle abzudecken, wird für die Dimensionierung der Eingangsschaltung ES als Ausgangsbedingung I0 der Stromwert des Stroms $I_L$ zum zweiten Zeitpunkt t1 unter ungünstigsten Lastbedingungen sowie Eingangs- und Ausgangsspannungsbedingungen herangezogen.

Durch das Auftreten einer Überspannung und den in der Folge auftretenden Stromfluss $I_{AVAL}$ reduziert sich die Spannung, auf welche sich die Induktivität L abmagnetisieren kann. In Abhängigkeit von der Überspannung, der Durchbruchsspannung Ud des Schaltelements SE, SE1 und der Ausgangsspannung Ua der Eingangsschaltung ES kann es beispielsweise anstatt nur zu einer Verlangsamung der Abmagnetisierung sogar zu einer Aufmagnetisierung der Induktivität L kommen - wenn z.B. während der Überspannung die Spannung Us am Schaltungspunkt zwischen Schaltelement SE, Induktivität L und aktiver Schaltereinheit FD auf einen höheren Wert steigt als die Ausgangsspannung Ua. Dies wird bei der Dimensionierung in den nachfolgend angegebenen Formeln 1 und 2 berücksichtigt, wobei als Vereinfachung eine Zeitspanne zwischen den Zeitpunkten t1 und t2 bzw. t3 und t4 als extrem kurz angenommen wird. Diese Annahme stellt neben einer Vereinfachung der Berechnung auch einen konservativen Ansatz für die Dimensionierung dar. Netzüberspannungsimpulse sind üblicherweise schwer abschätzbar und eher über einen Energiegehalt definierbar. D.h., Spannungsanstiegszeiten sind üblicherweise nicht vorherbestimmbar, daher ist es sinnvoll die Dimensionierung der Eingangsschaltung ES auf den ungünstigsten Fall aufzulegen - wie dies von den Formeln 1 und 2 beschrieben wird.

Ein maximaler Wert des Stroms $I_L$ durch die Induktivität L am Ende einer Überspannung - d.h. zum fünften Zeitpunkt t4, bei welchem die Überspannung so weit abgeklungen ist, dass kein Stromfluss $I_{AVAL}$ mehr durch das Schaltelement SE, SE1 auftritt

- kann daher, wie folgt, ermittelt werden:

$$\text{Formel 1:} \ I_L(t4) = I0 + \frac{Ue - Usp - Ua}{L} * (t4 - t1)$$

Dabei sind:

- I0 - der Wert für den Strom $I_L$ durch die Induktivität L zum zweiten Zeitpunkt t1, an welchem ein Stromfluss $I_{AVAL}$ durch das Schaltelement SE, SE1 aufgrund der Überspannung Ue beginnt;
- Ue - die Eingangs- bzw. Überspannung;
- Usp - die am Schaltelement SE bzw. am Gesamtschaltelement SE1 mit Zusatzbeschaltung anliegende Sperrspannung im Überspannungsbetrieb, bei welchen ein Stromfluss $I_{AVAL}$ fließt;
- Ua - die Ausgangsspannung der Eingangsschaltung ES und L die Induktivität L der Eingangsschaltung ES.

Für die Bestimmung der zwischen den Zeitpunkten t1 und t4 am Schaltelement SE, SE1 auftretenden Avalanche-Energie $E_{AS}$ kann dann entsprechend der folgenden Formel bestimmt werden:

$$\text{Formel 2:} \ E_{AS} = \int_{t1}^{t4} Usp(t) * I_{AVAL}(t)$$

Dabei wird das Produkt des zeitlichen Verlaufs der Sperrspannung Usp am Schaltelement SE, SE1 und des zeitlichen Verlaufs des Stromflusses $I_{AVAL}$ über das Schaltelement SE, SE1 zwischen den Zeitpunkten t1 und t4 integriert. Ein Verlauf des Stromflusses $I_{AVAL}$ entspricht dabei wie aus Figur 3 ersichtlich dem Verlauf des Stroms $I_L$ durch die Induktivität L.

Abschließend wird die ermittelte Avalanche-Energie $E_{AS}$, welche am Schaltelement SE, SE1 auftritt, noch mit einer vom jeweiligen Hersteller des Schaltelements SE, SE1 bzw. der Schaltelementkomponenten vorgegebenen maximal zulässigen Avalanche-Energie verglichen werden. Liegt die ermittelte Avalanche-Energie $E_{AS}$ unterhalb der maximal zulässigen Avalanche-Energie so kann das Schaltelement SE, SE1 für die Eingangsschaltung ES eingesetzt werden.

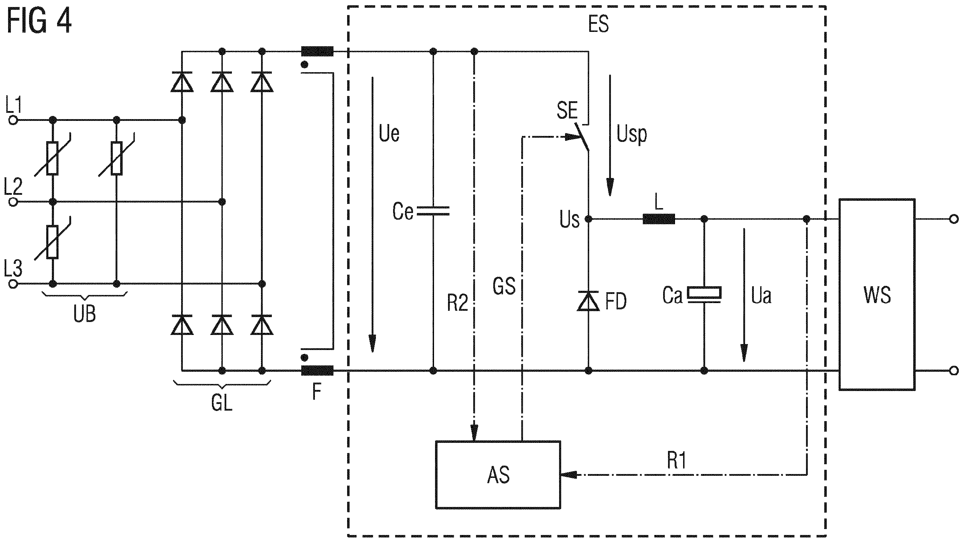

Figur 4 zeigt eine beispielhafte Verwendung der erfindungsgemäßen Eingangsschaltung ES in einer beispielhaften dreiphasigen und mehrstufig ausgestalteten Stromversorgung. Die beispielhafte Stromversorgung ist zur Energieversorgung an ein drei-phasiges Energieversorgungsnetz mit drei Phasen L1, L2, L3 angebunden. Alternativ kann als Energieversorgung auch eine einphasige oder eine zweiphasige Wechselspannung vorgesehen sein. Direkt bei der Netzanbindung bzw. vor einer Eingangsstufe GL sind Varistoren angeordnet, durch welche Überspannungen auf einen vorgebbare Überspannungswert (z.B. 2000V) begrenzt werden kann. Die dahinter angeordneten Bauteile der Stromversorgung werden damit vor hohen netzseitigen Überspannungsimpulsen bzw. Spannungsspitzen von Überspannungen geschützt. Nach den Varistoren ist die Eingangsstufe GL der Stromversorgung angeordnet, welche als Gleichrichtereinheit GL - z.B. bei einer dreiphasigen Spannungsversorgung ein 6-pulsiger Gleichrichter ausgestaltet ist. Durch die Gleichrichtereinheit GL wird aus der Wechselspannung des Versorgungsnetzes eine unstabilisierte bzw. ungeregelte Eingangsspannung Ue für dahinter angeordnete Stufen der Stromversorgung erzeugt.

Der Eingangsstufe GL kann beispielsweise noch eine Filtereinheit F (z.B. eine Transformatoreinheit als EMV-Filter) nachgeordnet sein. Nach der Eingangsstufe GL bzw. der Filtereinheit F ist die erfindungsgemäße Eingangsschaltung ES angeordnet, welche die durch die Eingangsstufe GL gleichgerichtete Versorgungsspannung als unstabilisierte bzw. ungeregelte Eingangsspannung Ue verwendet. Diese Eingangsspannung Ue wird durch die Eingangsschaltung ES in eine stabilisierte bzw. geregelte Ausgangsspannung Ua der Eingangsschaltung ES umgesetzt. Die stabilisierte bzw. geregelte Ausgangsspannung Ua bildet dann die Eingangsspannung für eine nachgeordnete Wandlerstufe WS, welche dann eine Versorgungsspannung für einen Verbraucher liefert. Die Wandlerstufe WS kann z.B. als potential-trennender Wandler, als Resonanzwandler, etc. ausgeführt sein und wird durch die erfindungsgemäße Eingangsschaltung ES vor eingangsseitigen Überspannungen geschützt.

**Patentansprüche**

1.    Eingangsschaltung für eine Stromversorgung zumindest aufweisend:

- ein eingangsseitig angeordnetes Schaltelement (SE);
- eine Induktivität (L), welche mit dem Schaltelement (SE) in Serie angeordnet ist;
sowie eine Freilaufdiode (FD);
wobei durch periodisches Schalten des Schaltelements (SE) zwischen einem leitenden Zustand und einem gesperrten Zustand eine Eingangsspannung (Ue) auf eine Ausgangsspannung (Ua) umsetzbar ist;
wobei die Induktivität (L) zumindest teilweise während einer Schaltperiode des Schaltelements (SE) von einem Strom ($I_L$) durchflossen ist, welcher eine ausgangsseitig angeordnete Kapazität (Ca) auflädt, an welcher die Ausgangsspannung (Ua) zur Verfügung stellbar ist;
wobei die Freilaufdiode (FD) den Strom ($I_L$) bei gesperrtem Zustand des Schaltelements (SE) übernimmt; und
wobei im gesperrten Zustand des Schaltelements (SE) und bei Überschreiten einer vorgegebenen Durchbruchsspannung (Ud) am Schaltelement (SE) ein Stromfluss ($I_{AVAL}$) über das Schaltelement (SE) zugelassen ist,
**dadurch gekennzeichnet, dass** bei Auftreten und Erkennen einer Überspannung auf einer Eingangsseite der Eingangsschaltung (ES) das Schaltelement (SE) in den gesperrten Zustand versetzt wird,
dass der Stromfluss ($I_{AVAL}$) über das im gesperrten Zustand befindliche Schaltelement (SE) an die Induktivität (L) weitergeleitet wird und die Freilaufdiode (FD) gesperrt ist,
und dass das Schaltelement (SE) und die Induktivität (L) derart dimensioniert sind, dass bei Auftreten der Überspannung eine so genannte Avalanche-Energie am Schaltelement (SE) entsteht, bei welcher das Schaltelement (SE) einem durch die Induktivität (L) fließenden Strom ($I_L$) für eine Dauer der Überspannung standhält.

2.    Eingangsschaltung nach Anspruch 1, **dadurch gekennzeichnet, dass** weiterhin das Schaltelement (SE) und die Induktivität (L) derart dimensioniert sind, dass die vorgegebene Durchbruchsspannung (Ud) am Schaltelement (SE) und die Ausgangsspannung (Ua) mindestens einen Summenwert ergeben, bei welchem der Strom ($I_L$) durch die Induktivität (L) bei Auftreten einer maximal zu erwartenden Überspannung unterhalb eines vorgebbaren Maximalwertes bleibt.

3.    Eingangsschaltung nach einem der vorangegangenen Ansprüchen, **dadurch gekennzeichnet, dass** eine Ansteuereinheit (AS) zum Ansteuern des Schaltelements (SE) derart vorgesehen ist, dass dem Schaltelement Ansteuerimpulse (GS) zugeführt werden, welche das Schaltelement (SE) abwechselnd in den leitenden Zustand und in den gesperrten Zustand versetzen.

4.    Eingangsschaltung nach einem der Ansprüche 1 bis 3,
**dadurch gekennzeichnet, dass** zum Erkennen der eingangsseitigen Überspannung eine Komparatoreinheit vorgesehen ist, welcher ein mittelbar oder unmittelbar an der Eingangsseite der Eingangsschaltung (SE) ermittelter Spannungsmesswert (R2) derart zuführbar ist, dass das Schaltelement (SE) bei Überschreiten eines vorgebbaren Referenzwertes durch den ermittelten und zugeführten Spannungsmesswert (R2) in den gesperrten Zustand versetzt wird.

5.    Eingangsschaltung nach einem der Ansprüche 1 bis 3,
**dadurch gekennzeichnet, dass** zum Erkennen der eingangsseitigen Überspannung auf Basis eines sich in Folge aufbauenden Stroms eine Komparatoreinheit vorgesehen ist, welcher ein mittels eines Stromsensors ermittelter Strommesswert (R2) derart zuführbar ist, dass das Schaltelement (SE) bei Überschreiten des vorgebbaren Referenzwertes durch den ermittelten und zugeführten Strommesswert (R2) in den gesperrten Zustand versetzt wird.

**6.** Eingangsschaltung nach einem der Ansprüche 1 bis 5, *dadurch gekennzeichnet, dass* das Schaltelement (SE) als Halbleiterschalter (S), insbesondere ein Metalloxid-Feldeffekt-Transistor oder MOS-FET, auf Silizium-Karbid-Basis ausgeführt ist.

**7.** Eingangsschaltung nach Anspruch 6, *dadurch gekennzeichnet, dass* der Halbleiterschalter (S) auf Silizium-Karbid-Basis ein als Bauteilkennwert vorgegebenes Mindest-Aufnahmevermögen für die so genannte Avalanche-Energie aufweist.

**8.** Eingangsschaltung nach einem der Ansprüche 1 bis 5, *dadurch gekennzeichnet, dass* das Schaltelement (SE, SE1) einen Halbleiterschalter (S), insbesondere einen Schalttransistor, und eine zum Halbleiterschalter (S) parallel angeordneten Einheit zur Begrenzung und Aufnahme der so genannten Avalanche-Energie umfasst.

**9.** Eingangsschaltung nach Anspruch 8, *dadurch gekennzeichnet, dass* die Einheit zur Begrenzung und Aufnahme der so genannten Avalanche-Energie als Suppressor-Diode (D), insbesondere Leistungs-Zenerdiode auf Siliziumbasis, ausgeführt ist.

**10.** Eingangsschaltung nach Anspruch 8, *dadurch gekennzeichnet, dass* die Einheit zur Begrenzung und Aufnahme der so genannten Avalanche-Energie als spannungsbegrenzende Schutzbeschaltung ausgeführt ist, welche zumindest eine Kapazität (Cb) und eine Diode (Db) umfasst.

**11.** Eingangsschaltung nach einem der vorangegangen Ansprüche, *dadurch gekennzeichnet, dass* die Eingangsschaltung (ES) zumindest Tiefsetzsteller-Topologie aufweist.

**12.** Eingangsschaltung nach einem der vorangegangen Ansprüche, *dadurch gekennzeichnet, dass* die Freilaufdiode (FD) als Diode ausgeführt ist.

**13.** Eingangsschaltung nach einem der Ansprüche 1 bis 12, *dadurch gekennzeichnet, dass* die Freilaufdiode (FD) als so genannte Schottky-Diode ausgeführt ist.

**14.** Eingangsschaltung nach Anspruch 13, *dadurch gekennzeichnet, dass* die so genannte Schottky-Diode als Halbleiterbauelement auf Silizium-Karbid-Basis ausgeführt ist.

**15.** Eingangsschaltung nach einem der vorangegangen Ansprüche, *dadurch gekennzeichnet, dass* die ausgangsseitig angeordnete Kapazität (Ca) als Keramikkondensator oder Elektrolyt-Kondensator oder als Kunststofffolien-Kondensator ausgeführt ist.

**16.** Eingangsschaltung nach einem der Ansprüche 1 bis 15, *dadurch gekennzeichnet, dass* das Schaltelement (SE) in einem positiven Spannungszweig der Eingangsschaltung (ES) angeordnet ist.

**17.** Eingangsschaltung nach einem der Ansprüche 1 bis 15, *dadurch gekennzeichnet, dass* das Schaltelement (SE) in einem negativen Spannungszweig der Eingangsschaltung (ES) angeordnet ist.

**18.** Eingangsschaltung nach einem der vorangegangenen Ansprüche, *dadurch gekennzeichnet, dass* eingangsseitig eine Gleichrichtereinheit (GL) zur Anbindung der Eingangsschaltung (ES) an eine zumindest zwei-phasige Spannungsversorgung (L1, L2, L3) angeordnet ist.

**19.** Eingangsschaltung nach einem der vorangegangen Ansprüche, *dadurch gekennzeichnet, dass* eingangsseitig zur Begrenzung der auftretenden Überspannung zumindest ein Varistor vorgesehen ist.

**20.** Eingangsschaltung nach einem der vorangegangenen Ansprüche, *dadurch gekennzeichnet, dass* der Eingangsschaltung (ES) ausgangsseitig eine Wandlerstufe (WS), insbesondere ein potential-trennende Wandlerstufe, nachgeordnet ist, deren Eingangsspannung die an der Kapazität (Ca) zur Verfügung gestellte Ausgangsspannung (Ua) der Eingangsschaltung (ES) bildet.

**Claims**

1. Input circuit for a power supply at least having:

   - a switch element (SE) arranged on the input side;
   - an inductance (L), which is arranged in series with the switch element (SE);
   and also a freewheeling diode (FD);
   wherein, through periodic switching of the switch element (SE) between a conductive state and a blocked state, an input voltage (Ue) is able to be converted to an output voltage (Ua);
   wherein the inductance (L), at least partially during a switching period of the switch element (SE), has a current ($I_L$) flowing through it, which charges a capacitance (Ca) arranged on the output side at which the output voltage (Ua) is able to be made available;
   wherein the freewheeling diode (FD) absorbs the current ($I_L$) in the blocked state of the switch element (SE) and wherein, in the blocked state of the switch element (SE) and if a predefined breakthrough voltage (Ud) at the switch element (SE) is exceeded, a current flow ($I_{AVAL}$) via the switch element (SE) is permitted,
   ***characterised in that,*** on occurrence and recognition of an overvoltage on the input side of the input circuit (ES), the switch element (SE) is put into the blocked state, that the current flow ($I_{AVAL}$) via the switch element (SE) in the blocked state is relayed to the inductance (L) and the freewheeling diode (FD) is blocked,
   and that the switch element (SE) and the inductance (L) are dimensioned in such a way that, on occurrence of the overvoltage, what is known as avalanche energy arises at the switch element (SE), at which the switch element (SE) withstands a current ($I_L$) flowing through the inductance (L) for a duration of the overvoltage.

2. Input circuit according to claim 1, ***characterised in that*** the switch element (SE) and the inductance (L) are furthermore dimensioned in such a way that the predefined breakthrough voltage (Ud) at the switch element (SE) and the output voltage (Ua) produce at least one sum value at which the current ($I_L$) through the inductance, on occurrence of a maximum overvoltage to be expected, remains below a maximum value able to be predefined.

3. Input circuit according to one of the preceding claims, ***characterised in that*** an activation unit (AS) for activating the switch element (SE) is provided in such a way that the switch element (SE) is supplied with activation pulses (GS), which alternately put the switch element (SE) into the conductive state and the blocked state.

4. Input circuit according to one of claims 1 to 3, ***characterised in that,*** to recognise the input-side overvoltage a comparator unit is provided, which is able to be supplied with a voltage value (R2) able to be determined indirectly or directly on the input side of the input circuit (SE) in such a way that the switch element (SE), if a predefined reference value is exceeded by the determined and supplied measured voltage value (R2), is put into the blocked state.

5. Input circuit according to one of claims 1 to 3, ***characterised in that,*** to recognise the input-side overvoltage on the basis of a current building up as a consequence, a comparator unit is provided, which is able to be supplied with a measured current value (R2) determined by means of a current sensor in such a way that the switch element (SE), if the predefined reference value is exceeded by the determined and supplied measured current value (R2), is put into the blocked state.

6. Input circuit according to one of claims 1 to 5, ***characterised in that*** the switch element (SE) is designed as a semiconductor switch (S), especially a metal oxide field effect transistor or MOS-FET based on silicon carbide.

7. Input circuit according to claim 6, ***characterised in that*** the semiconductor switch (S) based on silicon carbide has a predefined minimum acceptance capability for what is known as the avalanche energy as its characteristic component value.

8. Input circuit according to one of claims 1 to 5, ***characterised in that*** the switch element (SE, SE1) comprises a semiconductor switch (S), especially a switching transistor, and a unit for limiting and accepting what is known as the avalanche energy arranged in parallel with the semiconductor switch (S).

9. Input circuit according to claim 8, ***characterised in that*** the unit for limiting and accepting what is known as the avalanche energy is designed as a suppressor diode (D), especially as a power Zener diode based on silicon.

10. Input circuit according to claim 8, *characterised in that* the unit for limiting and accepting what is known as the avalanche energy is designed as voltage-limiting protective circuitry, which comprises at least a capacitance (Cb) and a diode (Db).

11. Input circuit according to one of the preceding claims, *characterised in that* the input circuit (ES) has at least buck converter topology.

12. Input circuit according to one of the preceding claims, *characterised in that* the freewheeling diode (FD) is designed as a diode.

13. Input circuit according to one of claims 1 to 12, *characterised in that* the freewheeling diode (FD) is designed as what is known as a Schottky diode.

14. Input circuit according to claim 13, *characterised in that* what is known as the Schottky diode is designed based on silicon carbide.

15. Input circuit according to one of the preceding claims, *characterised in that* the capacitance (Ca) arranged on the output side is designed as a ceramic capacitor or electrolytic capacitor or plastic film capacitor.

16. Input circuit according to one of claims 1 to 15, *characterised in that* the switch element (SE) is arranged in a positive voltage branch of the input circuit (ES).

17. Input circuit according to one of claims 1 to 15, *characterised in that* the switch element (SE) is arranged in a negative voltage branch of the input circuit (ES).

18. Input circuit according to one of the preceding claims, *characterised in that* a rectifier unit (GL) for linking the input circuit (ES) to an at least two-phase power supply system (L1, L2, L3) is arranged on the input side.

19. Input circuit according to one of the preceding claims, *characterised in that* at least one varistor is provided on the input side for limiting that overvoltage that occurs.

20. Input circuit according to one of the preceding claims, *characterised in that* the input circuit (ES) has a converter stage (WS), in particular an electrically isolating converter stage, arranged downstream from it on the output side, of which the input voltage is formed by the output voltage (Ua) of the input circuit (ES) made available at the capacitance (Ca).

**Revendications**

1. Circuit d'entrée pour une alimentation électrique présentant au moins :

- un élément de commutation (SE) disposé côté entrée ;
- une inductance (L) qui est disposée en série avec l'élément de commutation (SE) ;
et une diode de roue libre (FD) ;
dans lequel une tension d'entrée (Ue) peut être convertie en une tension de sortie (Ua) du fait de la commutation périodique de l'élément de commutation (SE) entre un état conducteur et un état bloqué ;
dans lequel l'inductance (L), au moins partiellement pendant une période de commutation de l'élément de commutation (SE), est traversée par un courant ($I_L$) qui charge une capacité (Ca) disposée côté sortie, au niveau de laquelle la tension de sortie (Ua) peut être mise à disposition ;
dans lequel la diode de roue libre (FD) prend en charge le courant ($I_L$) lorsque l'élément de commutation (SE) se trouve dans l'état bloqué ; et dans lequel une circulation du courant ($I_{AVAL}$) via l'élément de commutation (SE) est autorisée lorsque l'élément de commutation (SE) se trouve dans l'état bloqué et en cas de dépassement d'une tension de rupture (Ud) prédéfinie au niveau de l'élément de commutation,
*caractérisé en ce que* l'élément de commutation (SE) est déplacé dans l'état bloqué en cas de survenance et de détection d'une surtension à un côté d'entrée du circuit d'entrée (ES),
la circulation de courant ($I_{AVAL}$) est transmise à l'inductance (L) via l'élément de commutation (SE) qui se trouve à l'état bloqué et la diode de roue libre (FD) est bloquée ;

et l'élément de commutation (SE) et l'inductance (L) sont dimensionnés de telle sorte qu'en cas de survenance de la surtension, une énergie dite d'avalanche se forme au niveau de l'élément de commutation (SE), au cours de laquelle l'élément de commutation (SE) résiste à un courant ($I_L$) qui circule à travers l'inductance (L) pendant une durée de la surtension.

2. Circuit d'entrée selon la revendication 1, *caractérisé en ce que* l'élément de commutation (SE) et l'inductance (L) sont dimensionnés de telle sorte que la tension de rupture (Ud) prédéfinie au niveau de l'élément de commutation (SE) et la tension de sortie (Ua) donnent au moins une valeur cumulée avec laquelle le courant ($I_L$) via l'inductance (L) reste en-dessous d'une valeur maximale définissable en cas de survenance d'une surtension maximale à prévoir.

3. Circuit d'entrée selon l'une des revendications précédentes, *caractérisé en ce qu'*une unité de commande (AS) pour commander l'élément de commutation (SE) est prévue de telle sorte que des impulsions de commande (GS) soient amenées à l'élément de commutation qui placent alternativement l'élément de commutation (SE) dans l'état conducteur et dans l'état bloqué.

4. Circuit d'entrée selon l'une des revendications 1 à 3, *caractérisé en ce que,* pour la détection de la surtension côté entrée, une unité de comparateur est prévue, à laquelle une valeur de mesure de courant déterminée directement ou indirectement au niveau du côté entrée du circuit d'entrée (SE) peut être amenée de telle sorte que l'élément de commutation (SE) soit déplacé, en cas de dépassement d'une valeur de référence définissable, dans l'état bloqué par la valeur de mesure de courant (R2) déterminée et amenée.

5. Circuit d'entrée selon l'une des revendications 1 à 3, *caractérisé en ce que,* pour la détection de la surtension côté entrée sur la base d'un courant qui se forme par la suite, une unité de comparateur est prévue, à laquelle une valeur de mesure (R2) de courant déterminée au moyen d'un capteur de courant peut être amenée de telle sorte que l'élément de commutation (SE) soit déplacé, en cas de dépassement de la valeur de référence définissable, dans l'état bloqué par la valeur de mesure de courant (R2) déterminée et amenée.

6. Circuit d'entrée selon l'une des revendications 1 à 5, *caractérisé en ce que* l'élément de commutation (SE) est réalisé sous la forme d'un commutateur à semi-conducteur (S), en particulier un transistor à effet de champ à oxyde de métal ou MOS-FET, à base de carbure de silicium.

7. Circuit d'entrée selon la revendication 6, *caractérisé en ce que* le commutateur à semi-conducteur (S) à base de carbure de silicium présente une capacité d'absorption minimale prédéfinie en tant que valeur caractéristique de composant pour l'énergie dite d'avalanche.

8. Circuit d'entrée selon l'une des revendications 1 à 5, *caractérisé en ce que* l'élément de commutation (SE, SE1) présente un commutateur à semi-conducteur (S), en particulier un transistor de commutation, et une unité disposée parallèlement au commutateur à semi-conducteur (S) pour la limitation et l'absorption de l'énergie dite d'avalanche.

9. Circuit d'entrée selon la revendication 8, *caractérisé en ce que* l'unité pour la limitation et l'absorption de l'énergie dite d'avalanche est réalisée sous la forme d'une diode de suppression (D), en particulier une diode Zener de puissance à base de silicium.

10. Circuit d'entrée selon la revendication 8, *caractérisé en ce que* l'unité pour la limitation et l'absorption de l'énergie dite d'avalanche est réalisée sous la forme d'un circuit de protection à limitation de tension qui comprend au moins une capacité (Cb) et une diode (Db).

11. Circuit d'entrée selon l'une des revendications précédentes, *caractérisé en ce que* le circuit d'entrée (ES) présente au moins une topologie à abaissement de tension.

12. Circuit d'entrée selon l'une des revendications précédentes, *caractérisé en ce que* la diode de roue libre (FD) est réalisée sous la forme d'une diode.

13. Circuit d'entrée selon l'une des revendications 1 à 12, *caractérisé en ce que* la diode de roue libre (FD) est réalisée sous la forme d'une diode appelée diode Schottky.

14. Circuit d'entrée selon la revendication 13, *caractérisé en ce que* la diode appelée diode Schottky est réalisée sous la forme d'un dispositif à semi-conducteur à base de carbure de silicium.

15. Circuit d'entrée selon l'une des revendications précédentes, *caractérisé en ce que* la capacité (Ca) disposée côté entrée est réalisée sous la forme d'un condensateur en céramique ou d'un condensateur à électrolyte ou sous la forme d'un condensateur à film plastique.

16. Circuit d'entrée selon l'une des revendications 1 à 15, *caractérisé en ce que* l'élément de commutation (SE) est disposé dans une branche de tension positive du circuit d'entrée (ES).

17. Circuit d'entrée selon l'une des revendications 1 à 15, *caractérisé en ce que* l'élément de commutation (SE) est disposé dans une branche de tension négative du circuit d'entrée (ES).

18. Circuit d'entrée selon l'une des revendications précédentes, *caractérisé en ce qu'*une unité de redressement (GL) est disposée côté entrée pour relier le circuit d'entrée (ES) à une alimentation au moins biphasée (L1, L2, L3).

19. Circuit d'entrée selon l'une des revendications précédentes, *caractérisé en ce qu'*au moins une varistance est prévue côté entrée pour limiter la surtension qui se produit.

20. Circuit d'entrée selon l'une des revendications précédentes, *caractérisé en ce qu'*un étage de convertisseur (WS), en particulier un étage de convertisseur à séparation de potentiel, est disposé côté sortie en aval du circuit d'entrée (ES) ; la tension d'entrée de cet étage de convertisseur forme la tension d'entrée (Ua) du circuit d'entrée (ES) mise à disposition au niveau de la capacité (Ca).

FIG 1

# FIG 2

# FIG 3

FIG 4

EP 3 584 915 B1

21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20010283 U1
- DE 102005002360 A1
- DE 102004059455 A1